Europäisches Patentamt

European Patent Office

Office européen des brevets

(11) Publication number : **0 509 476 A2**

## (12) EUROPEAN PATENT APPLICATION

(21) Application number : **92106515.7**

(22) Date of filing : **15.04.92**

(51) Int. Cl.$^5$ : **F25D 29/00, F25D 11/02, F25D 21/06**

(30) Priority : **18.04.91 IT TO910294**

(43) Date of publication of application :
**21.10.92 Bulletin 92/43**

(84) Designated Contracting States :
**DE ES FR GB IT PT**

(71) Applicant : **MERLONI ELETTRODOMESTICI S.p.A.**
**Viale Aristide Merloni, 45**
**I-60044 Fabriano (AN) (IT)**

(72) Inventor : **Aisa, Valerio**
**Via Serraloggia 78/A**
**Fabriano (AN) (IT)**
Inventor : **Dolciotti, Marcello**
**Via Ancona 53**
**Maiolati Spontini (AN) (IT)**
Inventor : **Fontana, Claudio**
**Via S. Giovanni Battista 32**
**Arcevia (AN) (IT)**
Inventor : **Possanza, Mauro**
**Via Dante 71/D**
**Fabriano (AN) (IT)**

(54) Refrigerating apparatus.

(57)    The present invention relates to a refrigerating appliance comprising a first compartment (fresh food cell), a first device agent that can be activated and deactivated (compressor), a manual regulating device for regulating the effect of the appliance, a low cost temperature sensor for controlling the external environment and an electronic digital control device (micro-controller) that manages the functioning of the appliance ; the characterising principle of the appliance according to the invention consists in the fact that no sensor is present destined to detect the temperature within said first compartment and that the control of said temperature is carried out in an indirect manner utilising the value of the external temperature, the position of the manual regulation device and a collection of experimental data contained in the memory (ROM) of the micro-controller.

FIG. 1

EP 0 509 476 A2

The present invention relates to a refrigerating appliance comprising a first compartment (fresh food cell), a first device agent that can be activated and deactivated (compressor), a manual regulating device for regulating the effect of the appliance and an electronic digital control device (micro-controller) that manages the functioning of the appliance. Electrical household appliances of the type indicated are known, for instance all the modern domestic electronically controlled refrigerators normally comprise a first compartment destined to conserving fresh food and a second compartment destined to freezing and conserving food, a refrigerating circuit comprising a compressor, a first and a second evaporator, arranged respectively in said first and said second compartment, and a condenser; furthermore they are supplied with a temperature sensor in the first compartment (fresh food cell or fridge), in which a manual regulator for regulating the temperature to a preferred value is also supplied, within a field of acceptable values for conserving food; said sensor serves in deactivating the compressor when the temperature within the refrigerator cell has fallen below the value manually applied (+2° for example). It is also known to supply a second sensor to the evaporator of the first compartment, for detecting the instant of activation of the compressor (for example when the plate of the evaporator reaches the temperature of +4°).

The reading of the temperature within the fresh food compartment can therefore be of the direct type (sensor of the NTC type in the air inside the compartment) or indirect (a gas expansion sensor being in the vicinity of the evaporation zone) or a combination of the two systems.

The temperature sensors for the direct measures (sensor industrially produced with a protective resin and a connection cable)have an industrial cost of approximately an order of greatness being superior with respects the cost of actual sensitive element (NTC); furthermore as it could come into contact with the user, it requires a security insulation (transformer) with consequent further increases in costs.

The indirect reading systems, if used alone, produce a temperature within the compartment, that is greatly influenced by the external temperature, and therefore not satisfactory.

It has also been proposed (note for example the European patent application N° 0 298 349) to add an external temperature sensor that the control system can take into consideration; however the role taken by such additional sensor is very marginal and does not substitute that taken by the internal temperature sensors of the refrigerator. Therefore such addition represents a further increase in costs.

The aims of the present invention is therefore to indicate a refrigerating appliance and relative control system with reduced costs than those known.

In allowing for such aims the present invention has as its object a refrigerating appliance comprising a first compartment (fresh food cell), a first device agent that can be activated and deactivated (compressor), a manual regulating device for regulating the effect of the appliance and an electronic digital control device (micro-controller) that manages the functioning of the appliance, characterised by the fact that no sensor is present destined to detect the temperature within said first compartment. Further aims and advantages of the present invention will result in being clear from the following detailed description and annexed drawings supplied as a non-limiting example; wherein:
- figure 1 schematically represents the refrigerator according to the invention;
- figure 2 schematically represents a significant part of the logic flow of the control device of the refrigerator according to the invention.

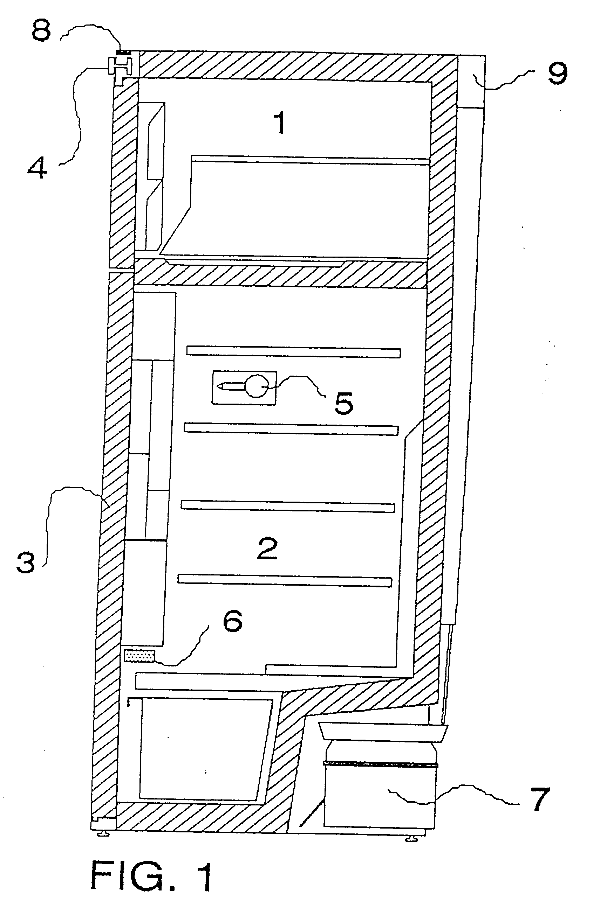

In figure 1, that schematically represents the refrigerator according to the invention, the reference number 2 indicates the first compartment (refrigerating cell); the reference number 1 indicates the second compartment (freezer cell); reference number 3 indicates the door of the refrigerator; reference number 4 indicates a potentiometer, that has the purpose of establishing the desired temperature within the refrigerating compartment; reference number 5 indicates a light, for internally illuminating the refrigerator; reference number 6 indices a device for detecting the conditions of opening or closing of the door 3 (for instance a known lever switch); reference number 7 indicates the compressor; reference number 8 an external temperature sensor arranged within the control panel of the refrigerator and directly welded to the stamped circuit placed therein; reference number 9 indicates the control box, containing an electric micro-processor control system.

The components 4 and 8 are welded to a part of the electronic function control device of the refrigerator, in particular the so called "interface unit", consisting of a stamped circuit card; a multiwire cable connects the interface card with the second part of the control device, that is situated above, on the posterior part of the refrigerator, contained in the box 9 and representing the actual control card; comprising of a supply circuit, the microprocessor and two power actuators and precisely a relay, that has the purpose of controlling the activation/deactivation of the compressor (indicated with the reference number 7), and a low power triac having the purpose of controlling the activation/deactivation of the light 5, situated within the refrigerator compartment, or, instead of the lamp, a defrosting resistance situated in the same compartment.

The functioning of the described refrigerator is the following.

The micro-controller contained in the principle control card (9), by way of the external sensor (8), and with the aid of suitable tables, contained in its operative memory (ROM), manages the thermostatic regulation of the refrigerator compartment (2), providing, by way of the appropriate relay, for activating and deactivating the compressor (7) according to the cycle values (ON/OFF) of tables corresponding to the external temperature and to the position of the potentiometer 4, established by the user.

The same micro-controller also provides for the periodical management of the defrosting of the refrigerator compartment by imposing a forced pause of the compressor for a suitable period of time (depending on the external temperature and on the position of the potentiometer 4).

In heavy working conditions it also provides, in aiding the defrosting, to activate the light 5 using it as a heat source or, instead of the lamp, to activate a defrosting resistance situated in the same compartment.

The tables contained in the ROM memory associated to the microprocessor contain the optimal values of the regulation parameters (that are represented by temporary values) for the thermostatic regulation and the defrosting, in function of the external temperature, utilising experimental values detected on a significant sample of prototypes of the appliance.

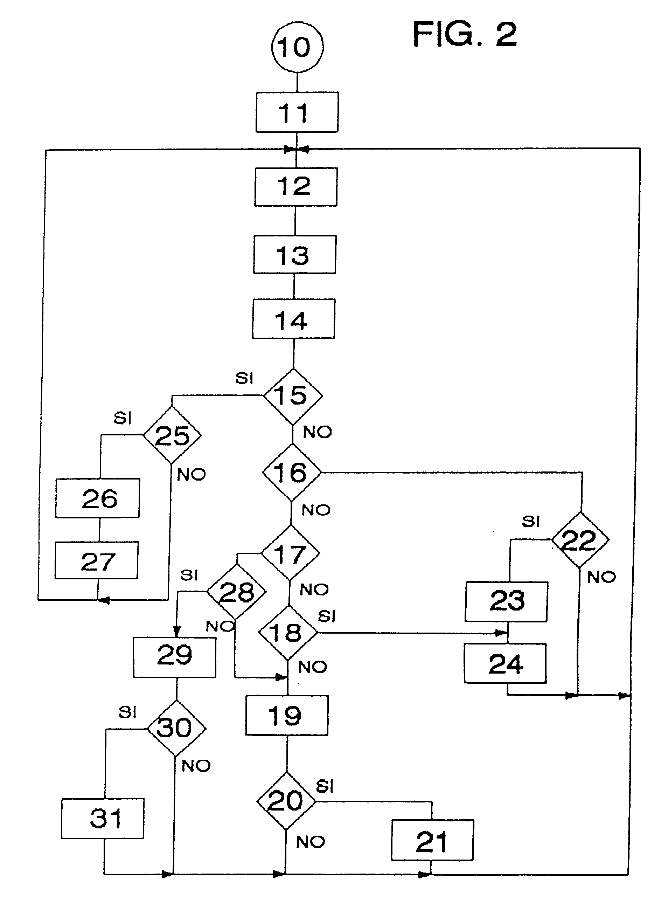

For a clearer understanding the behaviour of the control device 9 will now be described with reference to figure 2.

In figure 2 that schematically represents a significant part of the logic flow of the control device of the refrigerator according to the invention (and in particular that being relative to the management of the thermostatic regulation and of the defrosting of the refrigerator compartment 2), with the reference number 10 the starting block of the logic flow is indicated; such beginning for example, in the present case, could be that which occurs the first time that the refrigerator is put to use.

Block 10 passes control to block 11.

Block 11 proceeds to the initiation, and precisely:
- resets the internal clock to zero;
- resets the defrosting flag SB to zero;
- activates the compressor 9;
- places to 1 the power-up flag PU;
- resets the interval meter CS to zero;
- resets the defrosting request flag BR to zero;
- and passes control to block 12.

Block 12 provides for reading the external temperature TE and the temperature selected by the user TS; control is then passed on to block 13.

Block 13 provides for reading in the tables:
- the pause time of the compressor T1 (depending on TE and TS);
- the activation time of the compressor T1 (depending on TE and TS );
- the defrosting time T3 (depending on TE and TS);
- the defrosting interval T4 (depending on TE and TS);
- the duration of the initial cooling down interval T5; (depending on TE and TS);
and passes control to block 14.

Block 14 updates the clock and passes control to block 15.

Block 15 is a test block, it verifies whether the flag PU has a value of 1; in the positive case (YES output) control passes to block 25; in the negative case (NO output) control passes to the successive block 16. In this, as in all the test blocks of the present figure the YES outputs are laterally represented regards the test block, while the NO outputs are represented below.

Block 16 is a test block, it verifies whether the flag SB has a value of 1; in the positive case (YES output) control passes to block 22; in the negative case (NO output) control passes to the successive block 17.

Block 17 is a test block, it verifies whether the compressor is active in the positive case (YES output) control passes to block 28; in the negative case (NO output) control passes to the successive block 18.

Block 18 is a test block, it verifies whether the time indicated on the clock is greater than or equal to T1; in the positive case (YES output) control passes to block 24; in the negative case (NO output) control passes to the successive block 19.

Block 19 provides for updating the defrosting interval meter CS and passes control to block 20.

Block 20 is a test block, it verifies whether the time indicated on meter CS is greater than or equal to T4; in the positive case control passes to block 21; in the negative case control passes back to block 12.

Block 21 provides in placing at the value of 1 the BR flag and passes the control back to block 12.

Block 22 is a test block, that verifies whether the time indicated on the clock is greater than or equal to T3; in the positive case control passes to block 23; in the negative case control passes back to block 12.

Block 23 provides for resetting the flag SB to zero and passes control to block 24.

Block 24 provides for resetting the clock to zero and activates the compressor, and passes control back to block 12.

Block 25 is a test block, that verifies whether the time indicated on the clock is greater than or equal to T5; in the positive case control passes to block 26; in the negative case control passes back to block 12.

Block 26 provides for resetting the flag PU to zero and passes control to block 27.

Block 27 provides for resetting the clock to zero and to deactivate the compressor; and passes the control back to block 19.

Block 28 is a test block, that verifies whether the time indicated on the clock is greater than or equal to T2; in the positive case control passes to block 29; in the negative case control passes back to block 19.

Block 29 provides for resetting the clock to zero and to deactivate the compressor; and passes the control to block 30.

Block 30 is a test block, which verifies whether the flag BR has a value of 1; in the positive case (YES output) control passes to block 31; in the negative case (NO output) control passes back to block 12.

Block 31 provides for:
- resetting the CS to zero;
- resetting the flag BR to zero;
- setting SB to 1;
and passing control back to block 12.

The characteristics of the appliance described result in being clear from the description and annexed drawings.

As is also clear the advantages of the household appliance object of the present invention.

In particular they are represented by a reduced cost due to the elimination of the two internal temperature sensors and from the necessity of insulating the electronic control circuit; moreover the assembly is simplified due to the absence of the internal sensors; the thermostat/light box is simplified, being reduced only to the light; the potentiometer can be established inside the front panel.

For avoiding the possibility of ice forming in correspondence to the evaporation zone within the refrigerator compartment it is appropriate to provide for the following measures:
- to relate the frequency of defrosting not only to the external temperature, but also to the users use ( frequency of door openings and the duration of which);
- adding an appropriate level of security as to the duration and frequency of the defrostings;
- utilising the light ( or an eventual defrosting resistance appropriately fitted in correspondence to the zone of major ice gathering) as an auxiliary addition to the defrosting; it could be convenient with such aims an impulsive type input, for efficiently dosing the power;
- providing for signalling the opening of the door by means of flashing the same refrigerator light after the door has been open for 30 seconds (flashing for example in 1Hz frequency);
- to compensate the major heating of the of the refrigerator compartment in occasion of each defrosting by way of a "cold shock" of a duration in function of the external temperature and of the temperature selected by the user;
- to carry out in correspondence to every power cut a refrigerator defrosting after a determined period of time (for example two hours) from the power return, so as to avoid missing the defrostings due to frequent black outs that cause the resetting to zero of the meters in the memory of the microprocessor.

The present invention, even though having been described with reference to a refrigerator of static type- i.e. not characterised by the presence of a forced ventilator- can obviously also be applied to the so called "no frost" refrigerators (i.e. supplied with a forced ventilator). In such a case it is sufficient to add the control logic of the defrostings of the freezer compartment, for periodically activating, by way of an appropriate supplementary actuator, the defrosting resistance's with the aims of removing the ice gathered on the evaporator of the actual freezer compartment.

It is clear that numerous variants are possible by the man skilled in the art, to the appliance described as an example, without however departing from the novelty principles inherent in the invention.

For example the door switch could be substituted by a magnetic proximity sensor (the Hall effect), of contained costs and easily interfacable with the control electronics. Said proximity sensor, that takes advantage of the magnetic seal of the door, allows for improving the system of door opening detection and to greatly improve the mechanical solution (absence of protrusion).

## Claims

1. Refrigerating appliance comprising a first compartment (fresh food cell 2), a first device agent that can be activated and deactivated (compressor 7), a manual regulating device (4) for regulating the effect of the appliance and an electronic digital control device (9) that manages the functioning of the appliance, characterised by the fact that no sensor is present destined to detect the temperature within said first compartment (2).

2. Refrigerating appliance, according to claim 1, characterised by the fact that an external temperature sensor (8) is provided.

3. Refrigerating appliance, according to claim 2, characterised by the fact that the non volatile operative memory (ROM) associated to said control device (9) contains tables carrying the optimal values of the regulation parameters for the thermostatic regulation and defrosting, in function of the external temperature, measured by said sensor (8) and by the temperature selected by the user by way of the regulating device (4).

4. Refrigerating appliance, according to one of the previous claims, characterised by the fact that it also comprises a second compartment (1) destined for the freezing of food.

5. Refrigerating appliance, according to one or more of the previous claims, characterised by the fact that said electronic control device (9) also controls the illuminating light (5) of said first compartment (2) with the aim of creating an auxiliary aid to defrosting wherever necessary.

6. Refrigerating appliance, according to one or more of the previous claims, characterised by the fact that said control device (9) comprises circuitry means (18,20, 21, 22, 23, 24, 28, 29) for activating and deactivating said compressor (7) according to times read in the tables contained in said non volatile memory (ROM) to which it is associated, in function of the external temperature and of the temperature selected by the user.

7. Refrigerating appliance, according to one or more of the previous claims, characterised by the fact that said manual device fir establishing the temperature comprises a potentiometer (4).

8. Refrigerating appliance, according to one or more of the previous claims, characterised by the fact that said control device (9) comprises a microprocessor.

9. Refrigerating appliance, according to one or more of the previous claims, characterised by the fact that said refrigerator can also comprise an auxiliary resistance for defrosting said first compartment (2) that is periodically activated by said electronic control device (9) instead of the light (5).

10. Refrigerating appliance, according to one or more of the previous claims, characterised by the fact that said appliance comprises a door (3) opening sensor (6).

11. Refrigerating appliance, according to claim 10, characterised by the fact that said sensor (6) is of the magnetic proximity type, and co-operates with the magnetic seal of the door (3).

12. Refrigerating appliance, according to one or more of the previous claims, characterised by the fact that said control device (9) provides for relating the frequency of the defrostings not only with the external temperature, but also with the users use (frequency of door openings and the duration of which).

13. Refrigerating appliance, according to one or more of the previous claims from 10 to 12, characterised by the fact that said control device (9) provides a door open signal by way of flashing the same refrigerator light (5) after a determined period of time that the door (3)has been open.

14. Refrigerating appliance, according to one or more of the previous claims, characterised by the fact that said control device (9) provides for compensating the major heating of the refrigerator compartment (2) in occasion of each defrosting by way of a successive "cold shock" of a duration in function of the external temperature and of the temperature selected by the user.

15. Refrigerating appliance, according to one or more of the previous claims, characterised by the fact that said control device (9) provides for carrying out in correspondence to every power-cut a defrosting of the refrigerator after a determined period of time from the power supply return.

16. Refrigerating appliance, according to one or more of the previous claims from 4 to 15, characterised by the fact that said refrigerator comprises a forced ventilation system and that said electronic control device (9) provides for carrying out defrostings of said second compartment, periodically activating, by way of an opportune supplementary actuator, at least one resistance with the aim of removing the ice gathered on the evaporator of said second compartment.

FIG. 1

FIG. 2